# NEUE EUROPÄISCHE PATENTSCHRIFT

(11) **EP 3 765 761 B2**
(45) Veröffentlichungstag und Bekanntmachung des Hinweises auf die Entscheidung über den Einspruch: **17.12.2025**
(45) Hinweis auf die Patenterteilung: 01.03.2023
(21) Anmeldenummer: 18712529.9
(22) Anmeldetag: 12.03.2018
(51) Int. Cl.: F16D 65/18

(54) **SCHEIBENBREMSE FÜR NUTZFAHRZEUGE**
DISK BRAKE FOR UTILITY VEHICLES
FREIN À DISQUE POUR VÉHICULES UTILITAIRES

(43) Veröffentlichungstag der Anmeldung: 20.01.2021
(73) Patentinhaber: ZF CV Systems Europe BV, 1170 Brussels (BE)
(72) Erfinder: HARDER, Markus, 68766 Hockenheim (DE)
(74) Vertreter: Pavant Patentanwälte PartGmbB
(86) Internationale Anmeldenummer: PCT/EP2018/056060
(87) Internationale Veröffentlichungsnummer: WO 2019/174707

(56) Entgegenhaltungen:
- EP-A1- 2 690 304
- EP-A2- 1 391 628
- DE-A1- 10 341 095
- DE-A1- 102011 115 212
- DE-A1- 102015 105 344
- DE-A1- 102015 110 231
- DE-A1- 102016 001 311
- DE-U1- 9 312 128
- US-A- 3 061 386
- US-A- 4 981 390
- US-A1- 2004 163 899

## Beschreibung

Die Erfindung betrifft eine Scheibenbremse nach dem Oberbegriff von Anspruch 1 Scheibenbremsen für Fahrzeuge, insbesondere für Nutzfahrzeuge weisen im Allgemeinen eine Bremsscheibe und einen die Bremsscheibe umfassenden Bremssattel auf. Darüber hinaus ist in dem Bremssattel, an der Felgenseite, ein felgenseitiger Bremsbelag und auf der gegenüberliegenden Seite der Bremsscheibe ein zuspannseitiger Bremsbelag und eine Zuspanneinrichtung angeordnet. Als Felgenseite ist die Seite definiert, die in Richtung der Felge des Fahrzeugs zeigt. Als Zuspannseite ist der Bereich der Scheibenbremse zu verstehen, in dem die Zuspanneinrichtung angeordnet ist und die Zuspanneinrichtung während eines Bremsvorgangs den zuspannseitigen Bremsbelag gegen die Bremsscheibe drückt, also zuspannt. Die Nachstelleinrichtung weist zum Zuspannen des zuspannseitigen Bremsbelags, axial in Richtung des zuspannseitigen Bremsbelags, eine Stellspindel auf. An der Stirnseite der Stellspindel ist ein Druckteller angeordnet. Der Druckteller ist während eines Bremsvorgangs in Kontakt mit dem zuspannseitigen Bremsbelag. Der Druckteller und die Stellspindel sind nur über einen Zapfen des Drucktellers oder über einen Zapfen der Stellspindel miteinander verbunden.

Während eines Rückstellvorgangs, also wenn die Stellspindel sich axial entgegensetzt der Richtung des zuspannseitigen Bremsbelags bewegt, kann sich der Druckteller von der Stellspindel lösen.

Zudem führt eine fehlende axiale Sicherung des Drucktellers während eines Bremsvorgangs bei hohen Bremsscheibentemperaturen zum An-kleben an dem zuspannseitigen Bremsbelag. Die Folge sind defekte Dichtungen der Nachstelleinrichtung bis hin zu einer Schädigung der Scheibenbremse. Weiterhin führt ein zu großer Bewegungsfreiraum zwischen dem Druckteller und der Stellspindel zu einer nicht akzeptablen Bremsverschleißkompensation. Als Spiel wird in der Fertigungs- und Anwendungstechnik der Bewegungsfreiraum definiert. Nach der Montage des Drucktellers mit der Stellspindel ist als Spiel die freie Beweglichkeit des Drucktellers gegen oder mit der Stellspindel definiert.

Eine Lösung zur Vermeidung der zuvor genannten Probleme geht aus der DE 10 2015 114 349 A1 hervor. Der Spindelkopf weist eine umfängliche oder eine teilumfängliche Nut auf, in der zur Sicherung des Drucktellers eine Halteklammer geführt ist. Die Stirnkante des Aufnahmerings des Drucktellers liegt auf der Halteklammer auf. Zudem offenbart die DE 10 2015 114 349 A1 eine weitere Lösung zur axialen Sicherung des Drucktellers an der Stellspindel. An dem stirnseitig angeordneten Zapfen der Stellspindel sind zwei Nuten eingebracht. Der Aufnahmering des Drucktellers weist Bohrungen auf. Nach dem Anflanschen des Drucktellers an dem Zapfen der Stellspindel werden zwei Stifte durch die Bohrungen und die Nuten geführt, wobei die zwei Stifte den Druckteller an der Stellspindel fixieren.

Die Befestigungsvarianten, also die Halteklammer und die Stifte, der DE 10 2015 114 349 A1 weisen den Nachteil auf, dass das Spiel zwischen dem Druckteller und der Stellspindel nicht genau eingestellt werden kann. Die Halteklammer und die Stifte dienen nur zur axialen Sicherung gegen ein ungewolltes Lösen des Drucktellers von der Stellspindel.

Die DE 10 2015 110231 A1 offenbart eine Nutzfahrzeugscheibenbremse mit einer Zuspanneinrichtung, die eine Stellspindel und einen axial zwischen der Stellspindel und dem zuspannseitigen Bremsbelag angeordneten Druckteller in Form eines Druckstücks aufweist. Zwischen dem Druckteller und der Stellspindel ist ein Gleitlagerelement in Form einer Gleithülse angeordnet. Das Gleitlagerelement dient während der Nachstellung dem reibungsarmen Verdrehen zwischen dem Druckstück und der Stellspindel. Die DE 10 2011 115 212 A1 beschreibt eine Scheibenbremse mit einer Zuspanneinrichtung, wobei die Zuspanneinrichtung eine Stellspindel aufweist an der axial ein Druckteller in Form eines Druckstücks mittels eines austauschbaren Formschlusselements befestigt ist.

Die DE 103 41 095 A1 offenbart eine Scheibenbremse mit einem Bremssattel und einem Bremsenträger, wobei der Bremssattel mittels einem Loslager und einem Gleitlager. Über dem Bremsenträger gleitet. Eine Ausgestaltung des Drucktellers an der Nachstellspindel ist nicht gezeigt und nicht beschrieben.

Ein Einstellen des Spiel zwischen dem Druckteller und der Stellspindel ist aus dem Stand der Technik nicht bekannt.

Es ist daher die Aufgabe den genannten Stand der Technik zu verbessern und ein Befestigungsmittel bereitzustellen, welches zum einen den Druckteller gegen ein ungewolltes Lösen von der Stellspindel sichert und zum anderen ein genaues Einstellen des Spiels zwischen dem Druckteller und der Stellspindel erlaubt.

Die Aufgabe wird dadurch gelöst, dass zwischen einem Druckteller und einer Stellspindel ein Gleitlagerelement angeordnet ist. Entgegen dem Stand der Technik kann sich das Gleitlagerelement im eingebauten Zustand nicht von dem Druckteller lösen oder ungewollt verstellen, da das Gleitlagerelement zwischen dem Druckteller und der Stellspindel angeordnet ist. Je nach Dimensionierung, also je nach Höhe, Breite und/oder Länge des Gleitlagerelements, kann ein unterschiedliches Spiel zwischen dem Druckteller und der Stellspindel eingestellt werden. Das Gleitlagerelement ist vorzugsweise einteilig ausgebildet. Es ist aber auch denkbar, dass das Gleitlagerelement aus zwei oder mehreren Einzelteilen zusammengesetzt ist.

Das Gleitlagerelement ist fest, also verdrehsicher, in einer stirnseitigen Vertiefung der Stellspindel eingepresst. Eine Verdrehung des Gleitlagerelements ist nur in Verbindung mit einer gleichzeitigen Verdrehung der Stellspindel möglich. Eine Relativbewegung zwischen dem Druckteller und dem Gleitlagerelement muss dagegen stets gewährleistet sein. Der Innendurchmesser der stirnseitigen Vertiefung ist so gewählt, dass das Gleitlagerelement in der stirnseitigen Vertiefung eingebracht werden kann.

Es hat sich weiterhin als Vorteil erwiesen, dass das Gleitlagerelement axial an einem Drucktellerzapfen des Drucktellers angeordnet ist. Der Drucktellerzapfen und der Druckteller sind aus einem Gussteil geformt. Das Gleitlagerelement wird während eines Montageschrittes, axial in Richtung des Drucktellers, auf den Drucktellerzapfen geschoben. Zur einfacheren Montage und zur Vermeidung von Fehlmontagen kann der Drucktellerzapfen auch als Kodierung dienen, indem der Drucktellerzapfen und das dazugehörige Gleitlagerelement eine spezielle Geometrie aufweisen. Anders ausgedrückt, passt das Gleitlagerelement nur auf den Drucktellerzapfen, der die gleiche Geometrie aufweist wie eine Innenwand des Gleitlagerelements.

Erfindungsgemäß weist das Gleitlagerelement zumindest eine Prägung auf. Die Prägung des Gleitlagerelements dient, zusätzlich zur Dimensionierung des Gleitlagerelements, der Einstellung des Spiels zwischen dem Druckteller und der Stellspindel. Mit Hilfe eines Umformwerkzeuges wird die Prägung des Gleitlagerelements in das Gleitlagerelement eingebracht. Als Umformwerkzeug ist insbesondere ein Prägewerkzeug gemeint. Prägewerkzeuge weisen den Vorteil eines schnellen und unkomplizierten Formschlusses von Teilen auf. Nach der Anordnung des Gleitlagerelements auf dem Drucktellerzapfen, wird mit Hilfe des Prägewerkzeugs das Gleitlagerelement geprägt. Das heißt, es findet zumindest an einem Bereich des Gleitlagerelements eine Umformung statt indem, in axialer Richtung des Gleitlagerelements, an der Innenwand des Gleitlagerelements zumindest eine als Nut ausgebildete Prägung geprägt wird. Vorteilhaft erstreckt sich die Nut über die gesamte axiale Länge des Gleitlagerelements. In dem Bereich des Gleitlagerelements, in dem die Nut geprägt ist, wölbt sich die Außenwand entgegen der Richtung des Drucktellerzapfens radial nach außen. Vorzugsweise weist das Gleitlagerelement drei Prägungen mit einem Abstand von 120 Grad auf.

Darüber hinaus hat sich gezeigt, dass der mit dem Gleitlagerelement aufweisende Druckteller vorteilhaft axial mittels eines Pressvorgangs an einer Stirnseite der Stellspindel in der stirnseitigen Vertiefung der Stellspindel angeordnet ist. Der Drucktellerzapfen des Drucktellers wird mit dem auf dem Drucktellerzapfen geprägten Gleitlagerelement in die stirnseitige Vertiefung der Spindel mit einem Presswerkzeug gepresst. In einer weiteren vorteilhaften Ausgestaltung weist das Gleitlagerelement an der Innenwand des Gleitlagerelements eine Kunststoffbeschichtung auf. Während der Bremsvorgänge treten hohe Belastungen zwischen der Stellspindel und dem Druckteller auf. Als Folge der hohen Belastungen kann zwischen dem Gleitlagerelement und dem Drucktellerzapfen unter thermischer Belastung ein Verschweißen des Gleitlagerelements mit dem Drucktellerzapfen stattfinden. Durch nachfolgende anhaltende Bewegungen, zum Beispiel durch eine Rückstellbewegung der Stellspindel, wird das Gleitlagerelement von dem Drucktellerzapfen erneut getrennt. Bei jedem Schweiß- und Trennvorgang verbleiben Werkstoffteilchen von dem Gleitlagerelement oder dem Drucktellerzapfen an dem Drucktellerzapfen oder dem Gleitlagerelement und führen zu einer Schädigung des Drucktellerzapfens und dem Gleitlagerelement. Der zuvor beschriebene Vorgang ist in der Technik auch als "Fressen" bekannt. Zur Vermeidung des Fressens, weist das Gleitlagerelement an der Innenfläche, in Richtung des Drucktellerzapfens, eine Kunststoffbeschichtung auf. Mit der Kunststoffbeschichtung weist das Gleitlagerelement eine gewisse Gleiteigenschaft auf, die ein Verschweißen an dem Drucktellerzapfen verhindert. Die Oberfläche der Kunststoffbeschichtung oder des Kunststoffelements ist vorzugsweise als ebene Fläche ausgebildet.

Weiterhin ist eine Innenwand des Gleitlagerelements vorteilhaft kreisförmig ausgebildet. Kreisförmige Geometrien können gegenüber anderen Geometrien, wie rechteckige Geometrien einfacher bearbeitet und hergestellt werden. Die Innenwand des Gleitlagerelements ist aber nicht auf eine Kreisform beschränkt. Es sind auch alle anderen Geometrien, wie eine ovale Form, eine Rechteckform oder eine quadratische Form denkbar.

In einer weiteren vorteilhaften Ausgestaltung ist das Gleitlagerelement dazu ausgebildet den Druckteller, während einer entgegengesetzt der Richtung des zuspannseitigen Bremsbelages verlaufende Rückstellbewegung der Stellspindel, axial an der Stellspindel zu sichern. Das Gleitlagerelement ist dazu formschlüssig an dem Druckteller angeordnet. Zusätzlich ist das Gleitlagerelement kraftschlüssig in der stirnseitigen Vertiefung der Stellspindel eingebracht.

Ein weiterer Vorteil ist, dass das Gleitlagerelement dazu ausgebildet ist, ein Spiel zwischen dem Druckteller und der Stellspindel herzustellen. Das Spiel zwischen dem Gleitlagerelement und dem Drucktellerzapfen ist so dimensioniert, dass ein herausfallen aus der stirnseitigen Vertiefung der Stellspindel oder ein Verkanten des Drucktellers und ein daraus resultierender Schrägverschleiß des zuspannseitigen Bremsbelags, durch ein zu großes Spiel zwischen dem Gleitlagerelement und der Stellspindel, nicht möglich ist.

Je nachdem wie groß das Spiel sein soll, also die Bewegungsmöglichkeit des Drucktellerzapfens in der Stellspindel, wird das Gleitlagerelement mit einer höheren Kraft oder einer niedrigeren Kraft geprägt. Eine Prägung mit einer höheren Kraft hat die Folge, dass sich das Spiel zwischen dem Drucktellerzapfen und der Stellspindel vergrößert. Das Gegenteil tritt bei einer Prägung des Gleitlagerelements mit einer geringeren Kraft ein. Bei einer Prägung des Gleitlagerelements mit einer geringen Kraft, ist das Spiel zwischen dem Drucktellerzapfen und der Stellspindel im eingebauten Zustand kleiner. Bevorzugt weist das Gleitlagerelement eine Breite von 12 mm bis 15 mm auf. Besonders bevorzugt weist das Gleitlagerelement eine Breite von 13,6 mm auf. Die Breite des Gleitlagerelements ist entsprechend der Breite des Drucktellerzapfens angepasst. Damit ist der Druckzapfen vollständig in dem Gleitlagerelement gelagert. Der Innendurchmesser der Innenwand des Gleitlagerelements beträgt vorzugsweise 15 mm bis 17 mm und besonders bevorzugt 16mm. Der Innendurchmesser des Gleitlagerelements ist entsprechend dem Durchmesser des Drucktellerzapfens ausgebildet. Zudem weist das Gleitlagerelement vorzugsweise einen Außendurchmesser von 17 mm bis 19 mm und besonders bevorzugt von 18 mm auf. Der Außendurchmesser des Gleitlagerelements wird entsprechend dem Durchmesser der stirnseitigen Vertiefung der Stellspindel angepasst.

In Versuchen hat sich außerdem gezeigt, dass das Gleitlagerelement in einer Weiterbildung als Gleitlagerbuchse ausgebildet ist. Mit der Gleitlagerbuchse ist eine vollständige und dauerhafte Lagerung des Drucktellerzapfens in der stirnseitigen Vertiefung der Spindel gewährleistet.

In einer letzten vorteilhaften Ausgestaltung ist das Gleitlagerelement aus einem Metallwerkstoff gebildet. Als Metallwerkstoff ist vorzugsweise Stahl vorgesehen. Es sind auch aber auch Metallwerkstoffe aus Aluminium, Messing oder Bronze denkbar.

Nachfolgend werden ausgewählte Ausführungsbeispiele der Erfindung anhand der beigefügten Figuren erläutert.

Es zeigt:
Fig. 1 eine geschnittene schematische Ansicht der Scheibenbremse in der Draufsicht,
Fig.2 ein Gleitlagerelement in einer geschnittenen Seitenansicht,
Fig. 2a ein Gleitlagerelement ohne eine Kunststoffbeschichtung oder einem Kunststoffelement nach Fig. 2 in einer Frontalansicht,
Fig. 2b ein Gleitlagerelement mit einer Kunststoffbeschichtung nach Fig. 2 in einer Frontalansicht,
Fig. 3 eine Stellspindel mit einem Druckteller.

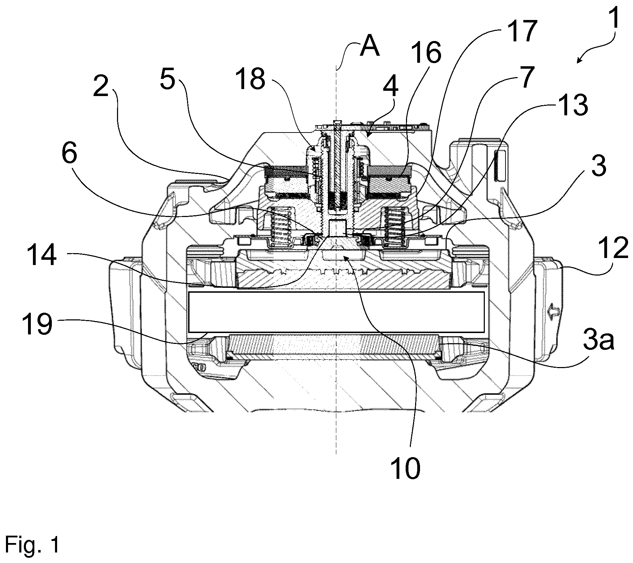

Fig. 1 zeigt eine Scheibenbremse 1 mit einem Bremsträger 12, in dem ein zuspannseitiger Bremsbelag 3 und ein felgenseitiger Bremsbelag 3a angeordnet sind. Ein Bremssattel 2 umfasst den Bremsträger 12, wobei der Bremssattel 2 in Axialrichtung A der Scheibenbremse 1 gleitend auf dem Bremsträger 12 gelagert ist. Eine Zuspanneinrichtung 4 umfasst einen Zuspannhebel 16, eine Druckplatte 17 und eine Nachstelleinrichtung 18 mit einer Stellspindel 5 und einen Druckteller 6. Die Zuspanneinrichtung 4 drückt über eine Drehbewegung, in Richtung des zuspannseitigen Bremsbelags 3 des Zuspannhebels 16, die Druckplatte 17 während eines Bremsvorgangs gegen den zuspannseitigen Bremsbelag 3. Der zuspannseitige Bremsbelag 3 wiederum drückt gegen eine Bremsscheibe 19 und bremst die Bremsscheibe 19 ab. Nach einem Bremsvorgang stellt die Nachstelleinrichtung 18 das Lüftspiel über die Stellspindel 5 und dem an der Stellspindel 5 angeordneten Druckteller 6 ein. Als Lüftspiel wird der Abstand zwischen der Bremsscheibe 19 und dem zuspannseitigen Bremsbelag 3 bzw. zwischen der Bremsscheibe 19 und dem felgenseitigen Bremsbelag 3a bezeichnet. Ein Gleitlagerelement 7 sichert den Druckteller 6 gegen ein Herausfallen aus der Stellspindel 5 während einer Rückstellbewegung, also eine Bewegung entgegengesetzt dem zuspannseitigen Bremsbelag 3, der Stellspindel 5. Ein Rückstellvorgang wird zum Beispiel bei einem Wechsel des zuspannseitigen Bremsbelags 3 und/oder des felgenseitigen Bremsbelags 3a durchgeführt. Das Gleitlagerelement 7 ist in einer stirnseitigen Vertiefung 14 der Stellspindel 5 an einem Drucktellerzapfen 13 des Drucktellers 6 angeordnet. Die stirnseitige Vertiefung 14 der Stellspindel 5 ist axial an einer, in Richtung des zuspannseitigen Bremsbelags 3 zeigenden, Stirnseite 10 der Stellspindel 5 eingebracht.

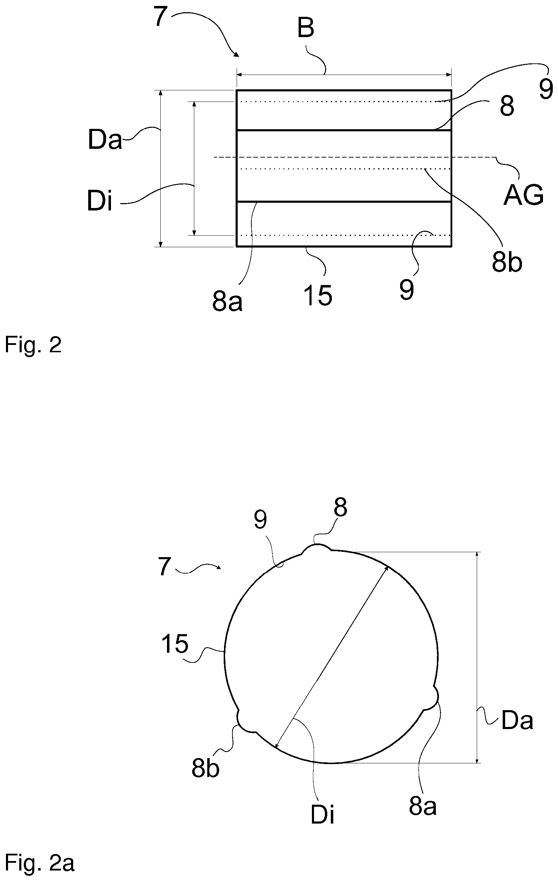

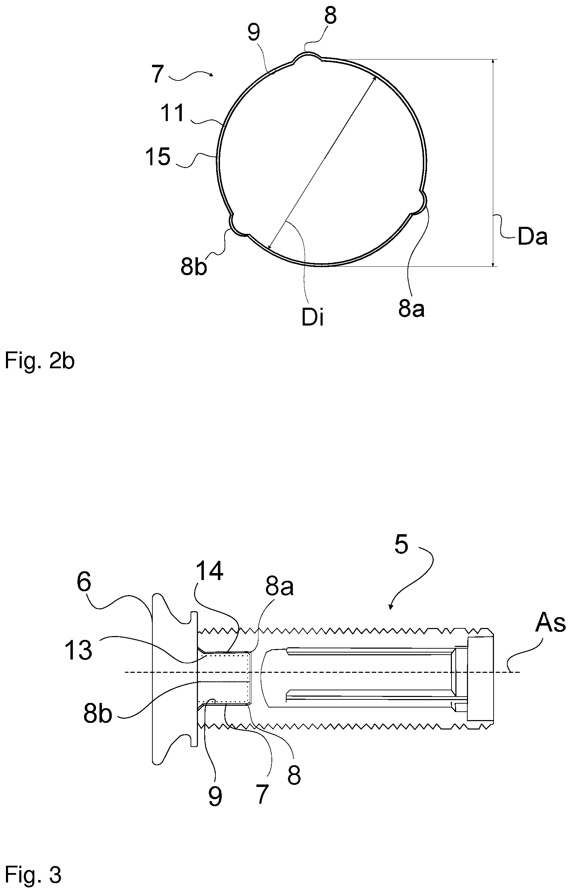

In Fig.2 ist das Gleitlagerelement 7 mit einer Innenwand 9 und einer Außenwand 15 im Detail gezeigt. Das Gleitlagerelement 7 weist in Axialrichtung AG eine Breite B von 13,6 mm auf. Ein Innendurchmesser "Di" des Gleitlagerelements 7 beträgt 16 mm und ein Außendurchmesser "Da" des Gleitlagerelements 7 beträgt 18 mm. An der Innenwand 9 des Gleitlagerelements 7 sind im Abstand von 120 Grad drei Prägungen 8, 8a, 8b eingefügt. Die Prägungen 8, 8a, 8b sind an der Innenwand 9 des Gleitlagerelements 7 als Nuten 8, 8a, 8b ausgebildet und erstrecken sich über die gesamte Breite B des Gleitlagerelements 7. In dem Bereich des Gleitlagerelements 7, in dem die Nuten 8, 8a, 8b geprägt sind, wölbt sich die Außenwand 15 des Gleitlagerelements 7, entgegengesetzt der Innenwand 9 des Gleitlagerelements, radial nach außen. Je nachdem, wie groß das Spiel zwischen dem Drucktellerzapfen 13 des Drucktellers 6 und der stirnseitigen Vertiefung 14 der Stellspindel 5 gemäß Fig. 1 ausgebildet sein soll, werden die Prägungen 8, 8a, 8b in ihrer Dimension mit einem Umformwerkzeuges kleiner oder größer ausgebildet. Als Dimension ist die Höhe, Breite und/oder Länge der Prägungen 8, 8a, 8b gemeint.

Das Gleitlagerelement 7 ist in dem Ausführungsbeispiel einteilig aus Stahl hergestellt.

Wie das Gleitlagerelement 7 nach Fig. 2 in der Frontalansicht aussieht, zeigt Fig. 2a. Insbesondere ist die Anordnung der drei Prägungen 8, 8a, 8b sichtbar.

In einer zweiten Ausführung, gemäß Fig. 2b, ist das nach Fig. 2 ausgebildete Gleitlagerelement 7 mit einer zusätzlichen Kunststoffbeschichtung 11 gezeigt. Die Kunststoffbeschichtung 11 verhindert den Kontakt zwischen der Innenwand 9 des Gleitlagerelements 7 und dem Drucktellerzapfen 13. Mit der zusätzlichen Kunststoffbeschichtung 11 wird ein ungewolltes Abnutzen oder eine Schädigung der Innenwand 9 des Gleitlagerelements 7 oder des Drucktellerzapfens 13 ganz oder zumindest teilweise vermieden.

Fig. 3 zeigt die Stellspindel 5 mit dem Gleitlagerelement 7 nach Fig. 2 und mit dem in axialer Richtung As an der Stellspindel 5 angeordneten Druckteller 6 im Detail. Die stirnseitige Vertiefung 14 der Stellspindel 5 ist topfförmig ausgebildet. An dem Drucktellerzapfen 13 ist das Gleitlagerelement 7 angeordnet, wobei das Gleitlagerelement 7 den Drucktellerzapfen 13 voll umschließt. Darüber hinaus ist die Anordnung der Prägungen 8, 8a, 8b des Gleitlagerelements 7 gezeigt. Die Prägungen 8, 8a, 8b des Gleitlagerelements 7 stützen sich an der stirnseitigen Vertiefung 14 der Stellspindel 5 ab.

### Bezugszeichenliste als Teil der Beschreibung

- 1: Scheibenbremse
- 2: Bremssattel
- 3: zuspannseitiger Bremsbelag
- 3a: felgenseitiger Bremsbelag
- 4: Zuspanneinrichtung
- 5: Stellspindel
- 6: Druckteller
- 7: Gleitlagerelement
- 8, 8a, 8b: Prägungen des Gleitlagerelements 7
- 9: Innenwand des Gleitlagerelements 7
- 10: Stirnseite der Stellspindel 5
- 11: Kunststoffbeschichtung
- 12: Bremsträger
- 13: Drucktellerzapfen
- 14: stirnseitige Vertiefung der Stellspindel 5
- 15: Außenwand des Gleitlagerelements 7
- 16: Zuspannhebel
- 17: Druckplatte
- 18: Nachstelleinrichtung
- 19: Bremsscheibe
- A: Axialrichtung der Scheibenbremse 1
- As: Axialrichtung der Stellspindel 5
- AG: Axialrichtung des Gleitlagerelements 7
- B: Breite des Gleitlagerelements 7
- Di: Innendurchmesser des Gleitlagerelements 7
- Da: Außendurchmesser des Gleitlagerelements 7

## Patentansprüche

1. Scheibenbremse (1) für ein Nutzfahrzeug umfassend eine Bremsscheibe (19), einen die Bremsscheibe (19) umfassenden Bremssattel (2), einen zuspannseitigen Bremsbelag (3), einen felgenseitigen Bremsbelag (3a) und einer in dem Bremssattel (2) angeordneten zuspannseitigen Zuspanneinrichtung (4), wobei die Zuspanneinrichtung (4) wenigstens eine Stellspindel (5) und einen axial zwischen der Stellspindel (5) und dem zuspannseitigen Bremsbelag (3) angeordneten Druckteller (6) aufweist, wobei ein Gleitlagerelement (7) zwischen dem Druckteller (6) und der Stellspindel (4) angeordnet ist, **dadurch gekennzeichnet, dass** das Gleitlagerelement (7) zumindest eine Prägung (8, 8a, 8b) aufweist, wobei das Gleitlagerelement (7) durch die zumindest eine Prägung (8, 8a, 8b) dazu ausgebildet ist, ein Spiel zwischen dem Druckteller (6) und der Stellspindel (5) herzustellen.

2. Scheibenbremse (1) nach Anspruch 1, **dadurch gekennzeichnet, dass** das Gleitlagerelement (7) axial an einem Drucktellerzapfen (13) des Drucktellers (6) angeordnet ist.

3. Scheibenbremse (1) nach einem der vorangegangenen Ansprüche, **dadurch gekennzeichnet, dass** der mit dem Gleitlagerelement (7) aufweisende Druckteller (6) axial mittels einem Pressvorgang an einer Stirnseite (10) der Stellspindel (5) angeordnet ist.

4. Scheibenbremse (1) nach einem der vorangegangenen Ansprüche, **dadurch gekennzeichnet, dass** das Gleitlagerelement (7) an einer Innenwand (9) des Gleitlagerelements (7) eine Kunststoffbeschichtung (11) aufweist.

5. Scheibenbremse (1) nach einem der vorangegangenen Ansprüche, **dadurch gekennzeichnet, dass** das Gleitlagerelement (7) eine Innenwand (9) aufweist und die Innenwand (9) des Gleitlagerelements (7) kreisförmig ausgebildet ist.

6. Scheibenbremse (1) nach einem der vorangegangenen Ansprüche, **dadurch gekennzeichnet, dass** das Gleitlagerelement (7) dazu ausgebildet ist, den Druckteller (6) während einer entgegengesetzt der Richtung des zuspannseitigen Bremsbelages (3) verlaufenden Rückstellbewegung der Stellspindel (5), axial an der Stellspindel (5) zu sichern, indem das Gleitlagerelement (7) formschlüssig an dem Druckteller (6) angeordnet ist und das Gleitlagerelement (7) kraftschlüssig in einer stirnseitigen Vertiefung (14) der Stellspindel (5) eingebracht ist.

7. Scheibenbremse (1) nach einem der vorangegangenen Ansprüche, **dadurch gekennzeichnet, dass** das Gleitlagerelement (7) eine Gleitlagerbuchse (7) ist.

8. Scheibenbremse (1) nach einem der vorangegangenen Ansprüche, **dadurch gekennzeichnet, dass** das Gleitlagerelement (7) aus einem Metallwerkstoff gebildet ist.

## Claims

1. Disk brake (1) for a commercial vehicle, comprising a brake disk (19), a brake caliper (2) comprising the brake disk (19), an application-side brake pad (3), a rimside brake pad (3a) and an application-side application device (4) arranged in the brake caliper (2), the application device (4) having at least one actuating spindle (5) and a pressure plate (6) arranged axially between the actuating spindle (5) and the application-side brake pad (3), a plain bearing element (7) being arranged between the pressure plate (6) and the actuating spindle (4), **characterized in that** the plain bearing element (7) has at least one stamped region (8, 8a, 8b), the plain bearing element (7) being designed by the at least one stamped region (8, 8a, 8b) to produce a play between the pressure plate (6) and the actuating spindle (5).

2. Disk brake (1) according to claim 1, **characterized in that** the plain bearing element (7) is arranged axially on a pressure plate pin (13) of the pressure plate (6).

3. Disk brake (1) according to either of the preceding claims,
**characterized in that** the pressure plate (6) comprising with the plain bearing element (7) is arranged axially by means of a pressing process on an end face (10) of the actuating spindle (5).

4. Disk brake (1) according to any of the preceding claims,
**characterized in that** the plain bearing element (7) has a plastics coating (11) on an inner wall (9) of the plain bearing element (7).

5. Disk brake (1) according to any of the preceding claims,
**characterized in that** the plain bearing element (7) has an inner wall (9) and the inner wall (9) of the plain bearing element (7) is circular.

6. Disk brake (1) according to any of the preceding claims,
**characterized in that** the plain bearing element (7) is designed to secure the pressure plate (6) axially on the actuating spindle (5) during a restoring movement of the actuating spindle (5) that is counter to the direction of the application-side brake pad (3) by the plain bearing element (7) being form-fittingly arranged on the pressure plate (6) and the plain bearing element (7) being force-lockingly introduced into an end-face recess (14) of the actuating spindle (5).

7. Disk brake (1) according to any of the preceding claims,
**characterized in that** the plain bearing element (7) is a plain bearing bush (7).

8. Disk brake (1) according to any of the preceding claims,
**characterized in that** the plain bearing element (7) is formed from a metal material.

## Revendications

1. Frein à disque (1) pour un véhicule utilitaire comprenant un disque de frein (19), un étrier de frein (2) comprenant le disque de frein (19), une garniture de frein (3) côté serrage, une garniture de frein (3a) côté jante et un dispositif de serrage (4) côté serrage disposé dans l'étrier de frein (2), dans lequel le dispositif de serrage (4) présente au moins une broche de réglage (5) et une plaque de pression (6) disposée axialement entre la broche de réglage (5) et la garniture de frein (3) côté serrage, dans lequel un élément de palier lisse (7) est disposé entre la plaque de pression (6) et la broche de réglage (4), **caractérisé en ce que** l'élément de palier lisse (7) présente au moins un gaufrage (8, 8a, 8b), dans lequel l'élément de palier lisse (7) est réalisé pour créer, au moyen de l'au moins un gaufrage (8, 8a, 8b), un jeu entre la plaque de pression (6) et la broche de réglage (5).

2. Frein à disque (1) selon la revendication 1, **caractérisé en ce que** l'élément de palier lisse (7) est disposé axialement sur un tourillon de plaque de pression (13) de la plaque de pression (6).

3. Frein à disque (1) selon l'une des revendications précédentes,
**caractérisé en ce que** la plaque de pression (6) présentant avec l'élément de palier lisse (7) est disposée axialement sur une face frontale (10) de la broche de réglage (5) au moyen d'un processus de pressage.

4. Frein à disque (1) selon l'une des revendications précédentes,
**caractérisé en ce que** l'élément de palier lisse (7) présente un revêtement en plastique (11) sur une paroi intérieure (9) de l'élément de palier lisse (7).

5. Frein à disque (1) selon l'une des revendications précédentes,
**caractérisé en ce que** l'élément de palier lisse (7) présente une paroi intérieure (9) et la paroi intérieure (9) de l'élément de palier lisse (7) est réalisée en forme de cercle.

6. Frein à disque (1) selon l'une des revendications précédentes,
**caractérisé en ce que** l'élément de palier lisse (7) est réalisé de manière à fixer axialement la plaque de pression (6) à la broche de réglage (5) pendant un mouvement de rappel de la broche de réglage (5) s'étendant à l'opposé de la direction de la garniture de frein (3) côté serrage en disposant l'élément de palier lisse (7) par complémentarité de forme sur la plaque de pression (6) et en introduisant l'élément de palier lisse (7) à force dans une cavité (14) côté frontal de la broche de réglage (5).

7. Frein à disque (1) selon l'une des revendications précédentes,
**caractérisé en ce que** l'élément de palier lisse (7) est une douille de palier lisse (7).

8. Frein à disque (1) selon l'une des revendications précédentes,
**caractérisé en ce que** l'élément de palier lisse (7) est formé à partir d'un matériau métallique.
